# EUROPEAN PATENT APPLICATION

(11) **EP 2 290 652 A1**
(43) Date of publication of application: **02.03.2011**
(21) Application number: 10157257.6
(22) Date of filing: 22.03.2010
(51) Int. Cl.: G11B 7/258, G11B 7/24

(54) **Optical recording mediums**

(30) Priority: 31.08.2009 IN CH21092009
(71) Applicant: Moser Baer India Limited, New Delhi 110020 (IN)
(72) Inventor: Nyati, Giriraj, 110020, New Delhi (IN); Sharma, Vinod, 110020, New Delhi (IN); Tayal, Akhil, 110020, New Delhi (IN)
(74) Representative: Roche, Dermot

(57) **Abstract**

Optical recording mediums, and methods and systems for manufacturing optical recording mediums are provided. The optical recording medium (100) includes a substrate (102) on which a recordable layer (104) and a reflective layer (106) are formed. The reflective layer (106) includes a predefined proportion of at least copper and zinc, wherein the predefined proportion is 50-75 % copper and 15-45 % zinc by mass.

## Description

### CROSS-REFERENCE TO RELATED APPLICATION

This application claims priority from Indian Patent Application No. 2109/CHE/2009 filed on August 31, 2009, titled 'Optical Recording Mediums', which is incorporated herein in its entirety by reference.

### BACKGROUND OF THE INVENTION

The present invention relates, in general, to optical recording mediums.

A typical optical recording medium includes a reflective layer made from a highly reflective material. Gold and silver are most common reflective materials used today. Apart from the requirement of high reflectivity, it is required that an optical recording medium be tolerant to moisture and temperature.

The use of gold and silver in manufacturing of optical recording mediums increases the cost of the optical recording mediums. Various attempts have been made in the past, to find a cheaper substitute to gold and silver. However, these attempts have failed, largely due to requirements of high reflectivity and high tolerance to moisture and temperature.

In light of the foregoing discussion, there is a need for an optical recording medium that uses a low-cost reflective material and has a lower cost, compared to conventional optical recording mediums.

### SUMMARY OF THE INVENTION

An object of the present invention is to provide an optical recording medium (and a manufacturing method and system thereof).

Another object of the present invention is to provide an optical recording medium that uses a low-cost reflective material and has a lower cost, compared to conventional optical recording mediums.

An embodiment of the present invention provides an optical recording medium that includes a substrate, a recordable layer formed over the substrate, a reflective layer formed over the recordable layer, and a protective layer formed over the reflective layer. The optical recording medium may, for example, be a Compact Disc (CD) or a Digital Versatile Disc (DVD).

Another embodiment of the present invention provides an optical recording medium that includes a substrate, a reflective layer formed over the substrate, a recordable layer formed over the reflective layer, and a protective layer formed over the recordable layer. The optical recording medium may, for example, be a Blu-ray Disc (BD).

The reflective layer includes a predefined proportion of at least copper and zinc. In accordance with an embodiment of the present invention, the predefined proportion includes 50-75 % copper and 15-45 % zinc by mass.

In accordance with an embodiment of the present invention, the reflective layer also includes at least one of: nickel or bismuth.

In accordance with a specific embodiment of the present invention, the reflective layer includes 60-70 % copper, 15-30 % zinc, and 5-20 % nickel by mass. In accordance with another specific embodiment of the present invention, the reflective layer includes 50-65 % copper, 30-45 % zinc, and 1-10 % bismuth by mass.

As the reflective layer is made from low-cost reflective materials, the cost of manufacturing of the optical recording medium is reduced. Therefore, the optical recording medium has a lower cost, compared to conventional optical recording mediums.

### BRIEF DESCRIPTION OF THE DRAWINGS

Embodiments of the present invention will hereinafter be described in conjunction with the appended drawings provided to illustrate and not to limit the scope of the claims, wherein like designations denote like elements, and in which:
FIG. 1 depicts various layers of an optical recording medium, in accordance with an embodiment of the present invention;
FIG. 2 depicts various layers of an optical recording medium, in accordance with another embodiment of the present invention;
FIG. 3 depicts various layers of an optical recording medium, in accordance with yet another embodiment of the present invention;
FIG. 4 depicts a system for manufacturing an optical recording medium, in accordance with an embodiment of the present invention;
FIG. 5 depicts a system for manufacturing an optical recording medium, in accordance with another embodiment of the present invention;
FIG. 6 depicts a method of manufacturing an optical recording medium, in accordance with an embodiment of the present invention;
FIG. 7 depicts a method of manufacturing an optical recording medium, in accordance with another embodiment of the present invention; and
FIG. 8 depicts an optical drive for reading and writing on an optical recording medium so manufactured, in accordance with an embodiment of the present invention.

The same reference numerals refer to the same parts throughout the various figures.

### DETAILED DESCRIPTION

As used in the specification and claims, the singular forms "a", "an" and "the" include plural references unless the context clearly dictates otherwise. For example, the term "a reflective layer" may include a plurality of reflective layers unless the context clearly dictates otherwise.

Embodiments of the present invention provide optical recording mediums, methods and systems for manufacturing an optical recording medium, and an optical drive for reading and writing on an optical recording medium. In the description of the embodiments of the present invention, numerous specific details are provided, such as examples of components and/or mechanisms, to provide a thorough understanding of embodiments of the present invention. One skilled in the relevant art will recognize, however, that an embodiment of the present invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the present invention.

### GLOSSARY

Optical recording medium: An optical recording medium is an optical medium that is capable of recording and reproducing data. Examples of optical recording mediums include, but are not limited to, Compact Discs (CDs), Digital Versatile Discs (DVDs), High-Definition DVDs (HD-DVDs), Blu-ray Discs (BDs), and MiniDiscs (MDs). One of ordinary skill in the art would appreciate that the term 'optical recording medium' is not limited to these examples only.

Substrate: A substrate provides support to various layers of an optical recording medium.

Recordable layer: A recordable layer is configured to record data.

Reflective layer: A reflective layer is capable of reflecting off a light ray incident on the optical recording medium. The reflected light could then be received by a light detector.

Protective layer: A protective layer is capable of protecting underlying layers against damage from external factors, such as scratches and dirt.

Buffer layer: A buffer layer is capable of controlling heat transfer between various layers of an optical recording medium.

Substrate-obtaining unit: A substrate-obtaining unit is configured to obtain a substrate of a desired shape and size.

Recordable-layer forming unit: A recordable-layer forming unit is configured to form a recordable layer.

Reflective-layer forming unit: A reflective-layer forming unit is configured to form a reflective layer. The reflective-layer forming unit could, for example, be configured to sputter-deposit a reflective material to form the reflective layer.

Protective-layer forming unit: A protective-layer forming unit is configured to form a protective layer.

Optical device: An optical device is a device that is capable of reading and writing on an optical recording medium.

Tray: A tray is configured to receive an optical recording medium.

Light source: A light source is configured to emit light rays of a predefined wavelength.

Optical lens: An optical lens is configured to focus the light rays on the optical recording medium.

Light detector: A light detector is configured to detect light rays reflected off the optical recording medium.

Rotator: A rotator is configured to rotate the optical recording medium, such that light rays are guided over the optical recording medium.

In accordance with an embodiment of the present invention, an optical recording medium includes a substrate, a recordable layer formed over the substrate, a reflective layer formed over the recordable layer, and a protective layer formed over the reflective layer. The optical recording medium may, for example, be a CD or a DVD.

In accordance with another embodiment of the present invention, an optical recording medium includes a substrate, a reflective layer formed over the substrate, a recordable layer formed over the reflective layer, and a protective layer formed over the recordable layer. The optical recording medium may, for example, be a BD.

In accordance with an embodiment of the present invention, the reflective layer includes a predefined proportion of at least copper and zinc. In accordance with an embodiment of the present invention, the predefined proportion includes 50-75 % copper and 15-45 % zinc by mass.

In addition to copper and zinc, the reflective layer could also include other suitable metals. In accordance with an embodiment of the present invention, the reflective layer also includes at least one of: nickel or bismuth.

In accordance with a specific embodiment of the present invention, the reflective layer includes 60-70 % copper, 15-30 % zinc, and 5-20 % nickel by mass. In accordance with another specific embodiment of the present invention, the reflective layer includes 50-65 % copper, 30-45 % zinc, and 1-10 % bismuth by mass.

In accordance with an embodiment of the present invention, the reflective layer is formed by sputter-depositing a reflective material that includes at least copper and zinc in a proportion substantially similar to the desired predefined proportion. Accordingly, the reflective material could be in the form of a sputter target made as per the predefined proportion.

In accordance with an embodiment of the present invention, the optical recording medium satisfies various testing parameters when subjected to a temperature of 55 degree Celsius and a relative humidity of 50 % for duration of 96 hours.

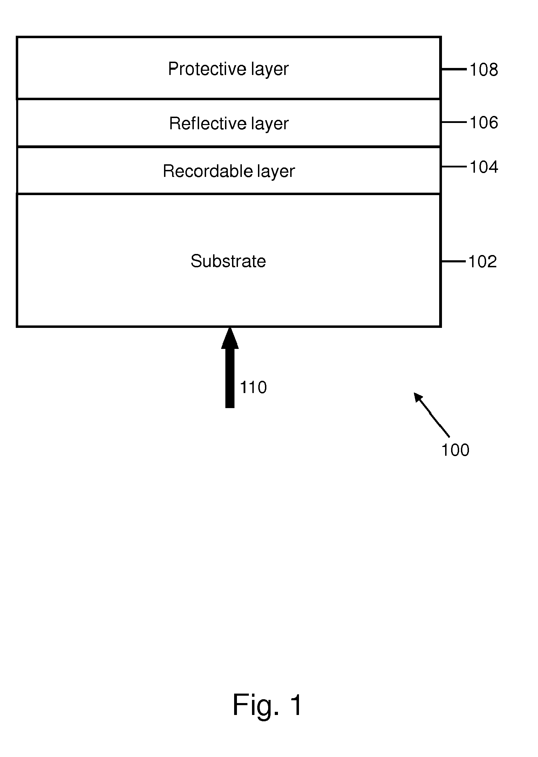

FIG. 1 depicts various layers of an optical recording medium 100, in accordance with an embodiment of the present invention. With reference to FIG. 1, optical recording medium 100 includes a substrate 102, a recordable layer 104 formed over substrate 102, a reflective layer 106 formed over recordable layer 104, and a protective layer 108 formed over reflective layer 106.

Substrate 102 may, for example, be made of a polycarbonate or a plastic.

Recordable layer 104 is configured to record data. Recordable layer 104 may, for example, be made of an organic dye, such as Cyanine, Phthalocyanine, Azo compounds, Formazan, Dipyrromethene compounds, or combinations thereof.

In accordance with an embodiment of the present invention, reflective layer 106 includes a predefined proportion of at least copper and zinc. In accordance with an embodiment of the present invention, the predefined proportion includes 50-75 % copper and 15-45 % zinc by mass.

In addition to copper and zinc, reflective layer 106 could include any other suitable metal. In accordance with an embodiment of the present invention, reflective layer 106 also includes at least one of: nickel or bismuth.

In accordance with a specific embodiment of the present invention, reflective layer 106 includes 60-70 % copper, 15-30 % zinc, and 5-20 % nickel by mass. In accordance with another specific embodiment of the present invention, reflective layer 106 includes 50-65 % copper, 30-45 % zinc, and 1-10 % bismuth by mass.

An arrow 110 represents the direction of a light ray incident on optical recording medium 100. The light ray is reflected off reflective layer 106, and is received by a light detector. This enables tracking of the light ray over optical recording medium 100.

Protective layer 108 is capable of protecting recordable layer 104 and reflective layer 106 against damage. Protective layer 108 may, for example, be made of an acrylic lacquer. Alternatively, protective layer 108 may include a bonding layer and a dummy su bstrate.

In accordance with an embodiment of the present invention, optical recording medium 100 satisfies various testing parameters when subjected to a temperature of 55 degree Celsius and a relative humidity of 50 % for duration of 96 hours.

Optical recording medium 100 may, for example, be of any suitable type, shape and size. Examples of optical recording medium 100 include, but are not limited to, CDs, DVDs, HD-DVDs, and MDs. Optical recording medium 100 may, for example, be recordable, re-writable, read-only memory, or random access memory.

FIG. 1 is merely an example, which should not unduly limit the scope of the claims herein. It is to be understood that the specific designation for optical recording medium 100 is for the convenience of reading and is not to be construed as limiting optical recording medium 100 to specific numbers, shapes, sizes, types, or arrangements of various layers of optical recording medium 100. One of ordinary skill in the art would recognize many variations, alternatives, and modifications of embodiments of the present invention.

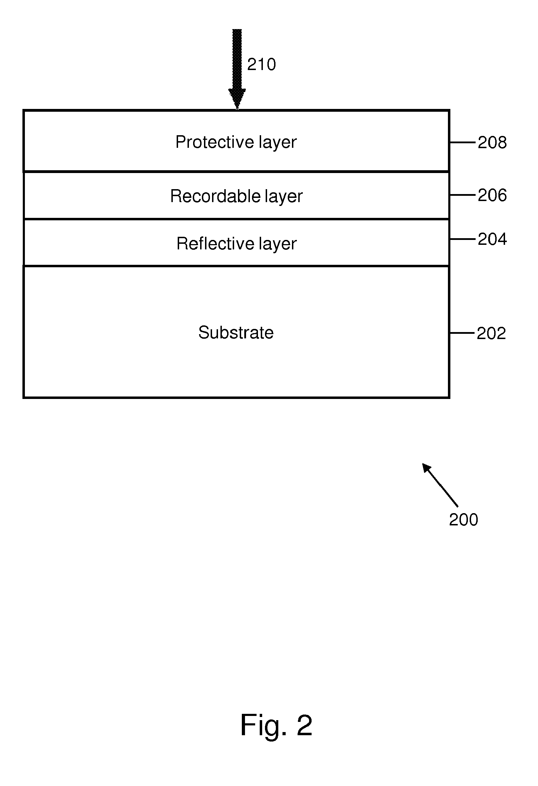

FIG. 2 depicts various layers of an optical recording medium 200, in accordance with another embodiment of the present invention. With reference to FIG. 2, optical recording medium 200 includes a substrate 202, a reflective layer 204 formed over substrate 202, a recordable layer 206 formed over reflective layer 204, and a protective layer 208 formed over recordable layer 206.

Substrate 202 may, for example, be made of a polycarbonate or a plastic.

In accordance with an embodiment of the present invention, reflective layer 204 includes a predefined proportion of at least copper and zinc. In accordance with an embodiment of the present invention, the predefined proportion includes 50-75 % copper and 15-45 % zinc by mass.

In addition to copper and zinc, reflective layer 204 could include any other suitable metal. In accordance with an embodiment of the present invention, reflective layer 204 also includes at least one of: nickel or bismuth.

In accordance with a specific embodiment of the present invention, reflective layer 204 includes 60-70 % copper, 15-30 % zinc, and 5-20 % nickel by mass. In accordance with another specific embodiment of the present invention, reflective layer 204 includes 50-65 % copper, 30-45 % zinc, and 1-10 % bismuth by mass.

An arrow 210 represents the direction of a light ray incident on optical recording medium 200. The light ray is reflected off reflective layer 204, and is received by a light detector. This enables tracking of the light ray over optical recording medium 200.

Recordable layer 206 is configured to record data. Recordable layer 206 may, for example, be made of an organic dye or a phase-changing inorganic material. Examples of organic dyes include, but are not limited to, Cyanine, Phthalocyanine, Azo compounds, Formazan, and Dipyrromethene compounds.

Protective layer 208 is capable of protecting recordable layer 206 against damage. Protective layer 208 may, for example, be made of an acrylic-based polymer.

In accordance with an embodiment of the present invention, optical recording medium 200 satisfies various testing parameters when subjected to a temperature of 55 degree Celsius and a relative humidity of 50 % for duration of 96 hours.

Optical recording medium 200 may, for example, be of any suitable type, shape and size. Optical recording medium 200 may, for example, be a BD. Optical recording medium 200 may, for example, be recordable, re-writable, read-only memory, or random access memory.

FIG. 2 is merely an example, which should not unduly limit the scope of the claims herein. It is to be understood that the specific designation for optical recording medium 200 is for the convenience of reading and is not to be construed as limiting optical recording medium 200 to specific numbers, shapes, sizes, types, or arrangements of various layers of optical recording medium 200. One of ordinary skill in the art would recognize many variations, alternatives, and modifications of embodiments of the present invention.

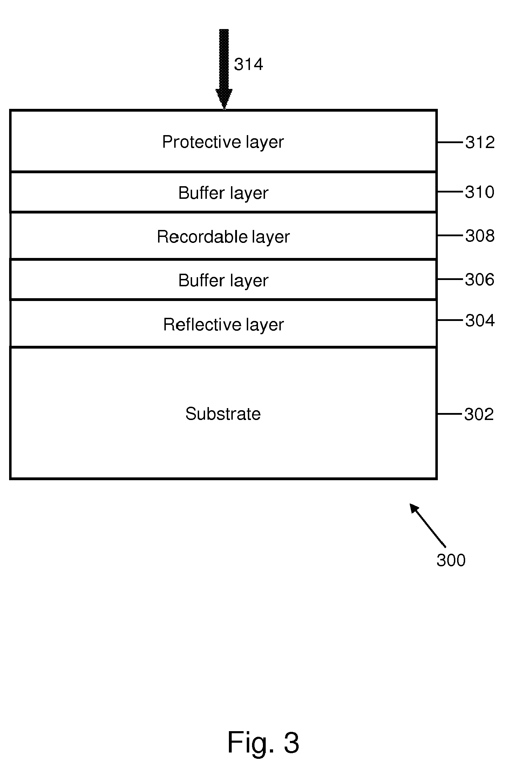

FIG. 3 depicts various layers of an optical recording medium 300, in accordance with yet another embodiment of the present invention. With reference to FIG. 3, optical recording medium 300 includes a substrate 302, a reflective layer 304 formed over substrate 302, a buffer layer 306 formed over reflective layer 304, a recordable layer 308 formed over buffer layer 306, a buffer layer 310 formed over recordable layer 308, and a protective layer 312 formed over buffer layer 310.

Substrate 302 may, for example, be made of a polycarbonate or a plastic.

In accordance with an embodiment of the present invention, reflective layer 304 includes a predefined proportion of at least copper and zinc. In accordance with an embodiment of the present invention, the predefined proportion includes 50-75 % copper and 15-45 % zinc by mass.

In addition to copper and zinc, reflective layer 304 could include any other suitable metal. In accordance with an embodiment of the present invention, reflective layer 304 also includes at least one of: nickel or bismuth.

In accordance with a specific embodiment of the present invention, reflective layer 304 includes 60-70 % copper, 15-30 % zinc, and 5-20 % nickel by mass. In accordance with another specific embodiment of the present invention, reflective layer 304 includes 50-65 % copper, 30-45 % zinc, and 1-10 % bismuth by mass.

An arrow 314 represents the direction of a light ray incident on optical recording medium 300. The light ray is reflected off reflective layer 304, and is received by a light detector. This enables tracking of the light ray over optical recording medium 300.

Buffer layer 306 is capable of controlling heat transfer between reflective layer 304 and recordable layer 308. Buffer layer 306 may, for example, be made of a dielectric material.

Recordable layer 308 is configured to record data. Recordable layer 308 may, for example, be made of an organic dye or a phase-changing inorganic material. Examples of organic dyes include, but are not limited to, Cyanine, Phthalocyanine, Azo compounds, Formazan, and Dipyrromethene compounds.

Buffer layer 310 is capable of controlling heat transfer between recordable layer 308 and protective layer 312. Buffer layer 310 may, for example, be made of a dielectric material.

Protective layer 312 is capable of protecting recordable layer 308 against damage. Protective layer 312 may, for example, be made of an acrylic-based polymer.

In accordance with an embodiment of the present invention, optical recording medium 300 satisfies various testing parameters when subjected to a temperature of 55 degree Celsius and a relative humidity of 50 % for duration of 96 hours.

Optical recording medium 300 may, for example, be of any suitable type, shape and size. Optical recording medium 300 may, for example, be a BD. Optical recording medium 300 may, for example, be recordable, re-writable, read-only memory, or random access memory.

FIG. 3 is merely an example, which should not unduly limit the scope of the claims herein. It is to be understood that the specific designation for optical recording medium 300 is for the convenience of reading and is not to be construed as limiting optical recording medium 300 to specific numbers, shapes, sizes, types, or arrangements of various layers of optical recording medium 300. One of ordinary skill in the art would recognize many variations, alternatives, and modifications of embodiments of the present invention.

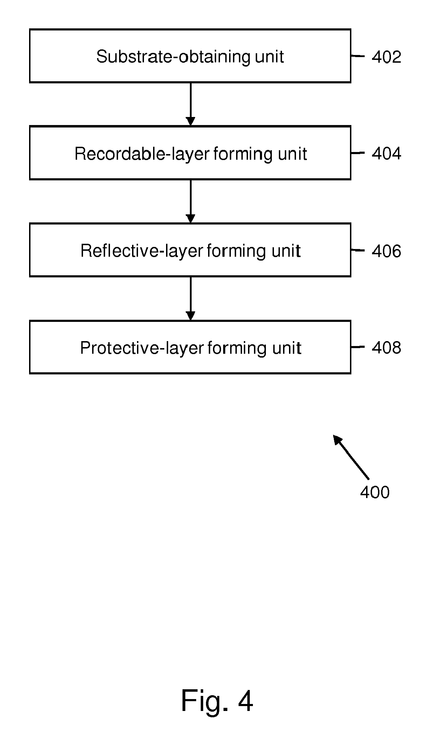

FIG. 4 depicts a system 400 for manufacturing an optical recording medium, in accordance with an embodiment of the present invention. System 400 includes a substrate-obtaining unit 402, a recordable-layer forming unit 404, a reflective-layer forming unit 406, and a protective-layer forming unit 408.

Substrate-obtaining unit 402 is configured to obtain a substrate. Substrate-obtaining unit 402 may, for example, mold a polymeric material to form a substrate of a desired shape and size. The polymeric material may, for example, be a polycarbonate or a plastic.

Substrate-obtaining unit 402 may, for example, be an injection molding unit configured to injection mold the polymeric material against an injection mold.

Recordable-layer forming unit 404 is configured to form a recordable layer over the substrate. The recordable layer may, for example, be made of an organic dye. Examples of organic dyes include, but are not limited to, Cyanine, Phthalocyanine, Azo compounds, Formazan, and Dipyrromethene compounds.

Recordable-layer forming unit 404 may, for example, perform spin coating using a solution of a dye in an appropriate solvent, followed by drying of the solvent.

Recordable-layer forming unit 404 could be configured to form more than one recordable layer. The number of recordable layers may, for example, depend on the type of an optical recording medium to be manufactured.

Reflective-layer forming unit 406 is configured to form a reflective layer over the recordable layer. The reflective layer is formed using a reflective material that includes a predefined proportion of at least copper and zinc. Consequently, the reflective layer so formed includes at least copper and zinc in the predefined proportion. In accordance with an embodiment of the present invention, the predefined proportion includes 50-75 % copper and 15-45 % zinc by mass.

Reflective-layer forming unit 406 may, for example, be a sputtering unit configured to sputter-deposit the reflective material over the recordable layer. Accordingly, the reflective material could be in the form of a sputter target made as per the predefined proportion.

As described earlier, the reflective layer could include other suitable metals as well. In accordance with an embodiment of the present invention, the reflective layer also includes at least one of: nickel or bismuth.

In accordance with a specific embodiment of the present invention, the reflective layer includes 60-70 % copper, 15-30 % zinc, and 5-20 % nickel by mass. In accordance with another specific embodiment of the present invention, the reflective layer includes 50-65 % copper, 30-45 % zinc, and 1-10 % bismuth by mass.

Protective-layer forming unit 408 is configured to form a protective layer over the reflective layer. For example, the protective layer may be made of an acrylic lacquer. In such a case, protective-layer forming unit 408 may perform spin coating, followed by UltraViolet (UV) curing. In another example, the protective layer may include a bonding layer and a dummy substrate. In such a case, protective-layer forming unit 408 may form the bonding layer, and place the dummy substrate over the bonding layer.

In accordance with an embodiment of the present invention, the optical recording medium so manufactured satisfies various testing parameters when subjected to a temperature of 55 degree Celsius and a relative humidity of 50 % for duration of 96 hours.

FIG. 4 is merely an example, which should not unduly limit the scope of the claims herein. One of ordinary skill in the art would recognize many variations, alternatives, and modifications of embodiments of the present invention.

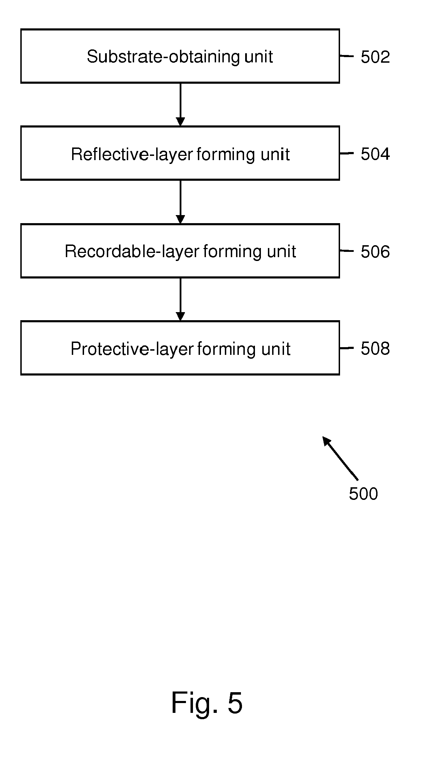

FIG. 5 depicts a system 500 for manufacturing an optical recording medium, in accordance with another embodiment of the present invention. System 500 includes a substrate-obtaining unit 502, a reflective-layer forming unit 504, a recordable-layer forming unit 506, and a protective-layer forming unit 508.

Substrate-obtaining unit 502 is configured to obtain a substrate. Substrate-obtaining unit 502 may, for example, mold a polymeric material to form a substrate of a desired shape and size. The polymeric material may, for example, be a polycarbonate or a plastic.

Substrate-obtaining unit 502 may, for example, be an injection molding unit configured to injection mold the polymeric material against an injection mold.

Reflective-layer forming unit 504 is configured to form a reflective layer over the substrate. The reflective layer is formed using a reflective material that includes a predefined proportion of at least copper and zinc. Consequently, the reflective layer so formed includes at least copper and zinc in the predefined proportion. In accordance with an embodiment of the present invention, the predefined proportion includes 50-75 % copper and 15-45 % zinc by mass.

Reflective-layer forming unit 504 may, for example, be a sputtering unit configured to sputter-deposit the reflective material over the substrate. Accordingly, the reflective material could be in the form of a sputter target made as per the predefined proportion.

As described earlier, the reflective layer could include other suitable metals as well. In accordance with an embodiment of the present invention, the reflective layer also includes at least one of: nickel or bismuth.

In accordance with a specific embodiment of the present invention, the reflective layer includes 60-70 % copper, 15-30 % zinc, and 5-20 % nickel by mass. In accordance with another specific embodiment of the present invention, the reflective layer includes 50-65 % copper, 30-45 % zinc, and 1-10 % bismuth by mass.

Recordable-layer forming unit 506 is configured to form a recordable layer over the reflective layer. The recordable layer may, for example, be made of an organic dye or a phase-changing inorganic material. Examples of organic dyes include, but are not limited to, Cyanine, Phthalocyanine, Azo compounds, Formazan, and Dipyrromethene compounds.

Recordable-layer forming unit 506 may, for example, perform spin coating using a solution of a dye in an appropriate solvent, followed by drying of the solvent. Alternatively, recordable-layer forming unit 506 may perform sputter-deposition of a phase-changing inorganic material.

Recordable-layer forming unit 506 could be configured to form more than one recordable layer. The number of recordable layers may, for example, depend on the type of an optical recording medium to be manufactured.

Protective-layer forming unit 508 is configured to form a protective layer over the recordable layer. For example, protective-layer forming unit 508 may spin coat an acrylic-based polymer over the recordable layer.

In accordance with an additional embodiment of the present invention, system 500 includes a buffer-layer forming unit configured to form a first buffer layer between the reflective layer and the recordable layer, and a second buffer layer between the recordable layer and the protective layer.

In accordance with an embodiment of the present invention, the optical recording medium so manufactured satisfies various testing parameters when subjected to a temperature of 55 degree Celsius and a relative humidity of 50 % for duration of 96 hours.

FIG. 5 is merely an example, which should not unduly limit the scope of the claims herein. One of ordinary skill in the art would recognize many variations, alternatives, and modifications of embodiments of the present invention.

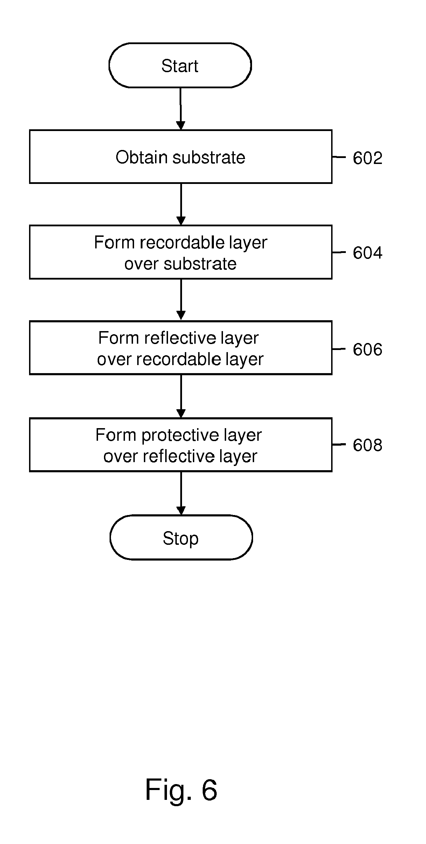

FIG. 6 depicts a method of manufacturing an optical recording medium, in accordance with an embodiment of the present invention. The method is illustrated as a collection of steps in a logical flow diagram, which represents a sequence of steps that can be implemented in hardware, software, or a combination thereof.

At step 602, a substrate is obtained. Step 602 may, for example, include molding a polymeric material to form a substrate of a desired shape and size. The polymeric material may, for example, be a polycarbonate or a plastic.

Step 602 may, for example, include injection molding the polymeric material against an injection mold.

At step 604, a recordable layer is formed over the substrate. The recordable layer may, for example, be made of an organic dye. Examples of organic dyes include, but are not limited to, Cyanine, Phthalocyanine, Azo compounds, Formazan, and Dipyrromethene compounds.

Step 604 may, for example, include spin coating using a solution of a dye in an appropriate solvent, followed by drying of the solvent.

In addition, more than one recordable layer could be formed at step 604. The number of recordable layers may, for example, depend on the type of an optical recording medium to be manufactured.

At step 606, a reflective layer is formed over the recordable layer. As described earlier, the reflective layer is formed using a reflective material that includes a predefined proportion of at least copper and zinc. Consequently, the reflective layer so formed includes at least copper and zinc in the predefined proportion. In accordance with an embodiment of the present invention, the predefined proportion includes 50-75 % copper and 15-45 % zinc by mass.

Step 606 may, for example, include sputter-depositing the reflective material over the recordable layer. Accordingly, the reflective material could be in the form of a sputter target made as per the predefined proportion.

As described earlier, the reflective layer could include other suitable metals as well. In accordance with an embodiment of the present invention, the reflective layer also includes at least one of: nickel or bismuth.

In accordance with a specific embodiment of the present invention, the reflective layer includes 60-70 % copper, 15-30 % zinc, and 5-20 % nickel by mass. In accordance with another specific embodiment of the present invention, the reflective layer includes 50-65 % copper, 30-45 % zinc, and 1-10 % bismuth by mass.

At step 608, a protective layer is formed over the reflective layer. For example, the protective layer may be made of an acrylic lacquer. In such a case, step 608 may include spin coating, followed by UV curing. In another example, the protective layer may include a bonding layer and a dummy substrate. In such a case, step 608 may include forming the bonding layer, and placing the dummy substrate over the bonding layer.

In accordance with an embodiment of the present invention, the optical recording medium so manufactured satisfies various testing parameters when subjected to a temperature of 55 degree Celsius and a relative humidity of 50 % for duration of 96 hours.

It should be noted here that steps 602-608 are only illustrative and other alternatives can also be provided where steps are added, one or more steps are removed, or one or more steps are provided in a different sequence without departing from the scope of the claims herein.

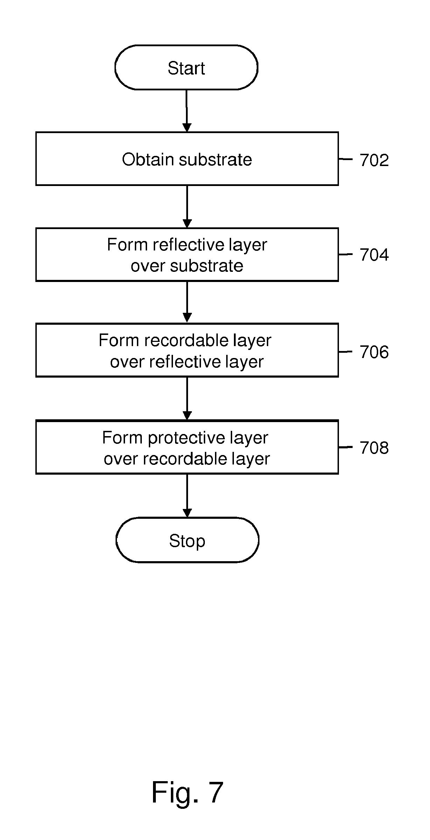

FIG. 7 depicts a method of manufacturing an optical recording medium, in accordance with another embodiment of the present invention. The method is illustrated as a collection of steps in a logical flow diagram, which represents a sequence of steps that can be implemented in hardware, software, or a combination thereof.

At step 702, a substrate is obtained. Step 702 may, for example, include molding a polymeric material to form a substrate of a desired shape and size. The polymeric material may, for example, be a polycarbonate or a plastic.

Step 702 may, for example, include injection molding the polymeric material against an injection mold.

At step 704, a reflective layer is formed over the substrate. As described earlier, the reflective layer is formed using a reflective material that includes a predefined proportion of at least copper and zinc. Consequently, the reflective layer so formed includes at least copper and zinc in the predefined proportion. In accordance with an embodiment of the present invention, the predefined proportion includes 50-75 % copper and 15-45 % zinc by mass.

Step 704 may, for example, include sputter-depositing the reflective material over the substrate. Accordingly, the reflective material could be in the form of a sputter target made as per the predefined proportion.

As described earlier, the reflective layer could include other suitable metals as well. In accordance with an embodiment of the present invention, the reflective layer also includes at least one of: nickel or bismuth.

In accordance with a specific embodiment of the present invention, the reflective layer includes 60-70 % copper, 15-30 % zinc, and 5-20 % nickel by mass. In accordance with another specific embodiment of the present invention, the reflective layer includes 50-65 % copper, 30-45 % zinc, and 1-10 % bismuth by mass.

At step 706, a recordable layer is formed over the reflective layer. The recordable layer may, for example, be made of an organic dye or a phase-changing inorganic material. Examples of organic dyes include, but are not limited to, Cyanine, Phthalocyanine, Azo compounds, Formazan, and Dipyrromethene compounds.

Step 706 may, for example, include spin coating using a solution of a dye in an appropriate solvent, followed by drying of the solvent. Alternatively, step 706 may include sputter-depositing a phase-changing inorganic material.

In addition, more than one recordable layer could be formed at step 706. The number of recordable layers may, for example, depend on the type of an optical recording medium to be manufactured.

At step 708, a protective layer is formed over the recordable layer. Step 708 may, for example, include spin coating an acrylic-based polymer over the recordable layer.

In accordance with an additional embodiment of the present invention, a step of forming a first buffer layer between the reflective layer and the recordable layer may be performed. In accordance with another additional embodiment of the present invention, a step of forming a second buffer layer between the recordable layer and the protective layer may be performed.

In accordance with an embodiment of the present invention, the optical recording medium so manufactured satisfies various testing parameters when subjected to a temperature of 55 degree Celsius and a relative humidity of 50 % for duration of 96 hours.

It should be noted here that steps 702-708 are only illustrative and other alternatives can also be provided where steps are added, one or more steps are removed, or one or more steps are provided in a different sequence without departing from the scope of the claims herein.

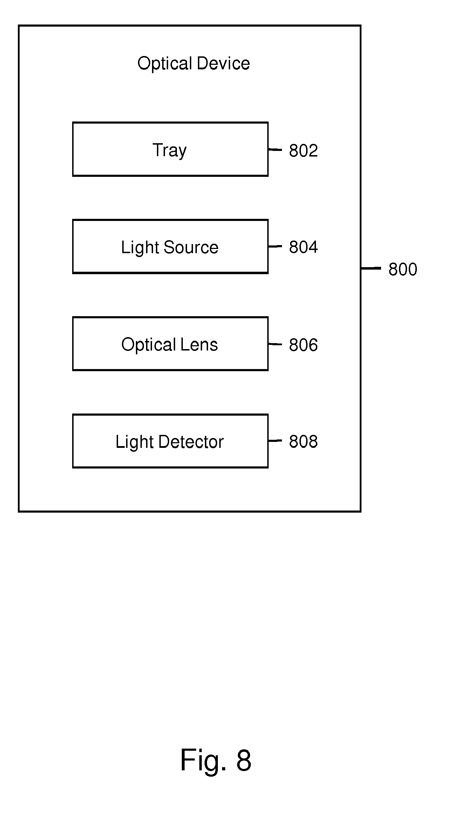

FIG. 8 depicts an optical device 800 for reading and writing on an optical recording medium, in accordance with an embodiment of the present invention. Optical device 800 includes a tray 802, a light source 804, an optical lens 806, and a light detector 808.

Tray 802 is configured to receive the optical recording medium. Tray 802 may, for example, be extendable and retractable between a loading position and an operating position.

Light source 804 is configured to emit light rays of a predefined wavelength, while optical lens 806 is configured to focus the light rays on the optical recording medium.

In accordance with an embodiment of the present invention, the predefined wavelength is based on the type of the optical recording medium. Consider, for example, two different types of optical recording mediums, namely, a DVD and a BD. In case of the DVD, light rays of a first predefined wavelength could be used. While, in case of the BD, light rays of a second predefined wavelength, which is smaller than the first predefined wavelength, could be used.

In addition, light source 804 could include a controller configured to control the amount of light rays, depending on the type of operation required. For example, different amounts of light rays could be used to write data onto and read data from the optical recording medium.

Light detector 808 is configured to detect light rays reflected off the optical recording medium. Data recorded onto the optical recording medium could, for example, be read by determining the change in the reflected light rays.

In case of an optical recording medium of a circular shape, optical device 800 may also include a rotator configured to rotate the optical recording medium. When the optical recording medium is rotated, light rays are guided over various portions of the optical recording medium.

Optical device 800 may, for example, be implemented in a personal computer or a laptop. A computer typically includes a processor for executing various programs, a display screen for displaying one or more user interfaces to a user, and one or more input devices for receiving inputs from the user. The computer may, for example, include a single integrated device that is capable of reading and writing on optical recording mediums.

FIG. 8 is merely an example, which should not unduly limit the scope of the claims herein. One of ordinary skill in the art would recognize many variations, alternatives, and modifications of embodiments of the present invention.

Embodiments of the present invention provide an optical recording medium that satisfies various testing parameters. These testing parameters are measured for an optical recording medium subjected to a temperature of 55 degree Celsius and a relative humidity of 50 % for duration of 96 hours.

For example, in case of DVDs, following testing parameters may be used:
Reflectivity: Reflectivity is the measure of the percentage of light returning from a program area (including lead-in, lead-out, middle and data area) of an optical recording medium. Too low a value of reflectivity may result in problems with reading of data.
Modulation: Modulation reveals information about the shape of pits, and therefore, about the quality of recording on an optical recording medium.
Asymmetry: Asymmetry is used to determine the signal values including deviation and Jitter as well as digital errors.
Parity Outer Fail (POF): A POF indicates the number of uncorrectable blocks present in an optical recording medium.
PISum8: A PISum8 indicates the sum of Parity Inner Errors (PIE) per eight consecutive blocks of an optical recording medium.
Data to Clock Jitter (DC Jitter): DC Jitter indicates the occurrence of deviations from an ideal duration.

Embodiments of the present invention provide optical recording mediums, and methods and systems for manufacturing an optical recording medium. An optical recording medium includes a reflective layer including a predefined proportion of at least copper and zinc.

The reflective layer has a high reflectivity, and is suitable for use in various types of optical recording mediums.

Moreover, the reflective layer is made from low-cost reflective materials. This reduces the overall cost of manufacturing of optical recording mediums, and hence reduces the cost of the optical recording mediums so manufactured.

Furthermore, the optical recording mediums so manufactured are stable at conditions prescribed by the standards, and therefore, are reliable.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. An optical recording medium (100) comprising:
a substrate (102);
a recordable layer (104) formed over the substrate (102), the recordable layer (104) being configured to record data;
a reflective layer (106) formed over the recordable layer (104), the reflective layer (106) comprising a predefined proportion of at least copper and zinc, the predefined proportion comprising 50-75 % copper and 15-45 % zinc by mass; and
a protective layer (108) formed over the reflective layer (106).

2. The optical recording medium of claim 1, wherein the reflective layer (106) further comprises at least one metal selected from the group consisting of nickel and bismuth.

3. The optical recording medium of claim 1, wherein the reflective layer (106) comprises 60-70 % copper, 15-30 % zinc, and 5-20 % nickel by mass.

4. The optical recording medium of claim 1, wherein the reflective layer (106) comprises 50-65 % copper, 30-45 % zinc, and 1-10 % bismuth by mass.

5. The optical recording medium of claim 1 is a Compact Disc (CD).

6. The optical recording medium of claim 1 is a Digital Versatile Disc (DVD).

7. An optical recording medium (200) comprising:
a substrate (202);
a reflective layer (204) formed over the substrate (202), the reflective layer (204) comprising a predefined proportion of at least copper and zinc, the predefined proportion comprising 50-75 % copper and 15-45 % zinc by mass;
a recordable layer (206) formed over the reflective layer (204), the recordable layer (206) being configured to record data; and
a protective layer (208) formed over the recordable layer (206).

8. The optical recording medium of claim 7, wherein the reflective layer (204) further comprises at least one metal selected from the group consisting of nickel and bismuth.

9. The optical recording medium of claim 7, wherein the reflective layer (204) comprises 60-70 % copper, 15-30 % zinc, and 5-20 % nickel by mass.

10. The optical recording medium of claim 7, wherein the reflective layer (204) comprises 50-65 % copper, 30-45 % zinc, and 1-10 % bismuth by mass.

11. The optical recording medium of claim 7 is a Blu-ray Disc (BD).

12. An optical device (800) for reading and writing on an optical recording medium, the optical recording medium comprising a reflective layer, the reflective layer comprising a predefined proportion of at least copper and zinc, the predefined proportion comprising 50-75 % copper and 15-45 % zinc by mass, the optical device comprising:
a tray (802) configured to receive the optical recording medium;
a light source (804) configured to emit light rays of a predefined wavelength;
an optical lens (806) configured to focus the light rays on the optical recording medium; and
a light detector (808) configured to detect light rays reflected off the optical recording medium.

13. The optical device of claim 12 further comprising a rotator configured to rotate the optical recording medium, such that light rays are guided over the optical recording medium.

14. The optical device of claim 12, wherein the predefined wavelength is based on the type of the optical recording medium.

15. The optical device of claim 12, wherein the optical recording medium is selected from the group consisting of a Compact Disc (CD), a Digital Versatile Disc (DVD), and a Blu-ray Disc (BD).
